# FASCICULE DE BREVET EUROPEEN

(11) **EP 1 971 814 B1**
(45) Date de publication et mention de la délivrance du brevet: **20.11.2013**
(21) Numéro de dépôt: 07703701.8
(22) Date de dépôt: 08.01.2007
(51) Int. Cl.: F27B 9/39, F27D 3/12, B65G 35/08, G21C 3/62, G21C 21/02

(54) **DISPOSITIF DE SEPARATION DE SABOTS DE FRITTAGE**
VORRICHTUNG ZUR TRENNUNG VON SINTERSCHIFFCHEN
DEVICE FOR SEPARATING SINTERING BOATS

(30) Priorité: 10.01.2006 FR 0650091
(43) Date de publication de la demande: 24.09.2008
(73) Titulaire: Areva NC, 75009 Paris (FR)
(72) Inventeur: PAGES, Jean-Pierre, F-30210 Sernhac (FR)
(74) Mandataire: Ahner, Philippe
(86) Numéro de dépôt international: PCT/EP2007/050150
(87) Numéro de publication internationale: WO 2007/080156

(56) Documents cités:
- EP-A- 1 241 422
- DE-A1- 3 609 792
- DE-A1- 10 251 854
- FR-A- 2 293 681
- GB-A- 1 151 549

## Description

### DOMAINE TECHNIQUE ET ART ANTÉRIEUR

La présente invention se rapporte à un dispositif de séparation de sabots destinés au transport de pastilles de combustible nucléaire, notamment de pastilles MOX (mélange d'oxyde de plutonium et d'oxyde d'uranium) à l'intérieur d'un four de frittage.

Les crayons de combustible nucléaire contiennent des pastilles formées à partir de poudre de combustible nucléaire, par exemple du type MOX, pressée puis frittée.

Le pressage de la poudre s'effectue au moyen d'une presse comportant plusieurs matrices de pressage, les pastilles sont ensuite disposées avec précaution dans des nacelles, elles-mêmes posées sur des sabots de transports. Ces sabots sont placés l'un derrière l'autre pour former un train de sabots et ensuite déplacés à l'intérieur d'un four de frittage.

Le frittage des pastilles de MOX s'effectue entre 1650°C et 1750°C sous atmosphère réductrice pendant plusieurs heures. Les sabots aptes à supporter de telles températures sont, par exemple réalisés en molybdène ou alliage de molybdène.

Les sabots sont de forme sensiblement rectangulaire ; ainsi lors du déplacement du train de sabots une face avant d'un sabot est en appui contre une face arrière du sabot qui le précède.

Les sabots sont déplacés à l'intérieur du four par un pousseur de course égale à la longueur d'un sabot.

Lorsque des pastilles transportées par un sabot ont terminé leur période de frittage, le sabot, qui forme le premier sabot du train, est extrait du four au moyen d'un pousseur latéral.

Le sabot extrait se retrouve dans un sas, il est alors déchargé des pastilles frittées, puis à nouveau chargé en pastilles non frittées et réintroduit dans le four, pour former le dernier sabot du train de sabots.

Or, il a été observé un phénomène dit de collage ou d'adhésion entre des sabots en contact. Ce collage est en partie dû à la diffusion du molybdène entre une face avant d'un sabot et une face arrière d'un sabot précédent, et au largage de résidus de combustion.

La solidarisation de deux sabots empêche alors une extraction d'un sabot par l'actionneur. En effet, lorsque l'actionneur pousse sur un sabot collé à un sabot suivant ou précédant, ce sont les deux sabots qui sont déplacés ensemble, ce qui empêche l'extraction du sabot.

Le document FR2 293 681 divulgue également un dispositif de transport de pastilles de combustible nucléaire à travers d'un four de frittage. Les pastilles sont transportées dans des petites sous-nacelles métalliques, par exemple en molybdène. Avant l'introduction dans le four, les sous-nacelles sont regroupées deux par deux dans des nacelles de transport.

C'est par conséquent un but de la présente invention d'offrir un dispositif permettant une extraction d'un sabot déterminé en fin de phase de frittage.

### EXPOSÉ DE L'INVENTION

Le but précédemment énoncé est atteint par un dispositif séparateur de sabots permettant une désolidarisation de deux sabots collés.

En d'autres termes, le dispositif selon la présente invention comporte des moyens pour solliciter, notamment mécaniquement la liaison par collage entre deux sabots et rompre celle-ci.

En effet, la liaison par collage est mécaniquement peu résistante ; par conséquent une contrainte mécanique de faible intensité est suffisante pour séparer les sabots sans les endommager.

Les sabots se déplacent sur un plan sensiblement horizontal, le dispositif de séparation selon la présente invention applique un effort selon une direction sensiblement verticale à au moins l'un des sabots, en particulier au niveau de zone de collage.

La présente invention a principalement pour objet un dispositif comportant des moyens de séparation d'au moins deux sabots de transport de pastilles de combustible nucléaire aptes à se déplacer selon un premier axe et dont deux faces d'extrémité sont en contact l'une contre l'autre, lesdits moyens de séparation étant aptes à déplacer au moins l'un des deux sabots, à proximité desdites faces d'extrémité en contact, selon un deuxième axe vertical sensiblement orthogonal au premier axe.

Selon un premier et un deuxième mode de réalisation, l'effort vertical est exercé par un excentrique du bas vers le haut.

Les moyens de séparation peuvent comporter au moins un excentrique apte à venir en contact avec une surface inférieure d'au moins un sabot pour le soulever le long d'un axe sensiblement orthogonal à une surface de déplacement des sabots.

Le contact entre le au moins un excentrique et le au moins un sabot s'effectue, par exemple, au niveau de l'appui entre les extrémités des deux sabots.

Le contact entre le au moins un excentrique et le au moins un sabot peut également avoir lieu sur un des sabots à proximité de l'appui entre les deux sabots.

De manière avantageuse, le dispositif de séparation selon la présente invention comporte des moyens pour limiter le déplacement d'au moins une extrémité d'un sabot le long de l'axe de soulèvement.

Ladite extrémité dont le déplacement est limité, peut alors être du côté opposé à l'extrémité soulevée.

Dans un premier mode de réalisation, les moyens de limitation du déplacement comprennent des butées fixées sur des parois latérales du four.

Ces butées peuvent être formées par des réglettes comportant un évidement sur leur face inférieure en regard des sabots pour permettre leur soulèvement.

L'évidement a, par exemple, la forme d'un V retourné.

De manière avantageuse, le dispositif selon la présente invention comporte des moyens pour régler la distance entre les réglettes et les sabots, lesdits moyens étant formés par des excentriques montés dans des fentes pratiquées dans les réglettes.

Dans un deuxième mode de réalisation, les moyens pour limiter le déplacement le long de l'axe orthogonal au plan de déplacement des sabots, limitent simultanément le déplacement de l'extrémité d'un des deux sabots destiné à être soulevé, ladite extrémité étant éloignée de la partie à soulever, et d'une extrémité de l'autre sabot du côté de l'appui entre les deux sabots.

Les moyens pour limiter le déplacement le long de l'axe orthogonal au plan de déplacement des sabots comportent, par exemple, des excentriques se rapprochant d'une surface supérieure des sabots pour limiter leur soulèvement par rapport à la partie destinée à être soulevée.

Les excentriques de limitation du déplacement le long de l'axe orthogonal au plan de déplacement des sabots, sont synchronisés avec le déplacement en rotation des excentriques de soulèvement de manière à ce que les excentriques de limitation de déplacement et les excentriques de soulèvement se rapprochent simultanément des surfaces supérieure et inférieure des sabots respectivement.

De manière avantageuse, tous les excentriques sont entraînés par un seul moyen d'entraînement et sont liés en rotation par une chaîne.

Dans un troisième mode de réalisation, les moyens de séparation sont aptes à exercer un choc sur au moins un sabot à proximité de la face collée à l'autre sabot selon une direction verticale vers le bas.

Les moyens de séparation peuvent comporter des bras pour maintenir le sabot latéralement et transmettre le choc au sabot, lesdits bras étant appliqués au premier sabot par un vérin.

Dans un exemple de réalisation, le choc est appliqué par une masse qui chute par gravité.

De manière avantageuse, la masse est libérée lorsqu'une contrainte prédéterminée est appliquée au premier sabot par des bras destinés à être en appui sur le sabot.

Le dispositif selon le troisième mode de réalisation peut comporter des moyens pour suspendre la masse et des moyens pour escamoter lesdits moyens de suspension.

Les moyens d'escamotage sont, par exemple commandés par un capteur qui détecte que la contrainte prédéterminée est atteinte.

Dans un exemple de réalisation, les moyens de suspension comportent une équerre mobile en rotation autour d'un axe solidaire d'un châssis du dispositif de séparation, ladite équerre comportant une branche d'appui sur laquelle la masse vient en appui, et une branche d'actionnement pour provoquer l'escamotage de la branche d'appui.

Le capteur peut alors comporter un brin apte à venir coopérer avec la branche d'actionnement pour provoquer le basculement de l'équerre et l'escamotage de la branche d'appui.

Les bras sont avantageusement solidaires par une extrémité opposée à celle destinée à venir en contact du premier sabot, d'un palonnier raccordé au vérin par un bras de transmission et par un axe le long duquel la masse est apte à coulisser.

Le bras de transmission, dans un exemple de réalisation, comporte un manchon extérieur fixé à une extrémité du vérin, un manchon intérieur apte à coulisser dans le manchon extérieur, un axe de guidage apte à coulisser dans la manchon intérieur et un moyen élastique monté dans le manchon extérieur, entre le manchon extérieur et le manchon intérieur.

La masse est, par exemple en appui au repos sur une patte fixée sur le manchon extérieur.

De manière avantageuse, le dispositif selon le troisième mode de réalisation comporte également un capteur de position repos du vérin. Ce capteur et/ou le capteur détectant que la contrainte prédéterminée est atteinte peut être du type à came comportant une surface de came solidaire du manchon extérieur et un élément apte à se déplacer le long de la surface de came.

De manière avantageuse, les bras comportent à leur extrémité destinée à venir en contact avec le premier sabot, une portée formant butée verticale et une face latérale formant butée latérale.

Les extrémités des bras peuvent être chanfreinées.

Dans un exemple particulier, les bras ont au repos une position rentrée de manière à ce que la distance séparant les extrémités des bras soit inférieure à celle séparant des extrémités latérales d'un sabot.

La présente invention a également pour objet une installation pour le frittage de pastilles de combustible nucléaire comportant un four de frittage dans lequel sont destinés à se déplacer en colonne des sabots portant des nacelles et un dispositif de séparation selon la présente invention, ledit dispositif de séparation étant disposé en aval du four dans le sens de déplacement des sabots.

La présente invention a également pour objet un procédé de fabrication de pastilles de combustible nucléaire comportant les étapes suivantes :
a) détermination de la présence d'au moins un sabot,
b) application d'une contrainte mécanique à au moins un sabot selon une direction sensiblement verticale.

Lors de l'étape a), la détermination de la présence d'un sabot s'effectue avantageusement par l'intermédiaire de la détection d'un sabot aval prêt à être évacué.

Il peut être prévu lors de l'étape a), l'arrêt du déplacement des sabots.

Lors de l'étape b), la contrainte mécanique peut être appliquée aux deux sabots simultanément ou à un seul des deux sabots.

### BRÈVE DESCRIPTION DES DESSINS

La présente invention sera mieux comprise à l'aide de la description qui va suivre et des dessins annexés, sur lesquels :
- la figure 1 est une vue en coupe longitudinale d'un premier mode de réalisation d'un dispositif selon la présente invention,
- la figure 2 est une vue en coupe selon le plan de coupe B-B de la figure 1,
- la figure 3A est une vue en coupe transversale de la figure 1,
- la figure 3B est une vue d'un détail extérieur du dispositif selon la figure 1,
- la figure 4 est une vue en coupe selon le plan de coupe C - C de la figure 1,
- la figure 5 est une vue de détail de la figure 1,
- la figure 6 est une vue de dessus d'un deuxième mode de réalisation d'un dispositif selon la présente invention,
- la figure 7 est une vue en coupe selon le plan E-E de la figure 6,
- la figure 8 est une vue de côté du dispositif de la figure 6 selon la flèche F,
- la figure 9 est une vue en coupe selon le plan A-A de la figure 8,
- la figure 10 est une demi-vue en coupe selon le plan C-C de la figure 8,
- la figure 11 est une vue en coupe partielle selon le plan B-B de la figure 8,
- la figure 12 est une vue de détail de la figure 11 avec un outil de réglage,
- la figure 13 est une vue de détail d'une coupe selon le plan G-G de la figure 6,
- la figure 14 est une vue en coupe d'un troisième mode de réalisation d'un dispositif selon la présente invention selon un plan orthogonal à la surface de déplacement des sabots,
- la figure 15 est une vue en coupe selon le plan A-A de la figure 14,
- la figure 16 est une vue de dessus du dispositif de la figure 14,
- la figure 17 est une vue de détail de la figure 15 dans une position repos,
- la figure 18 est une vue détail de la figure 14 en position repos.

### EXPOSÉ DÉTAILLÉ DE MODES DE RÉALISATION PARTICULIERS

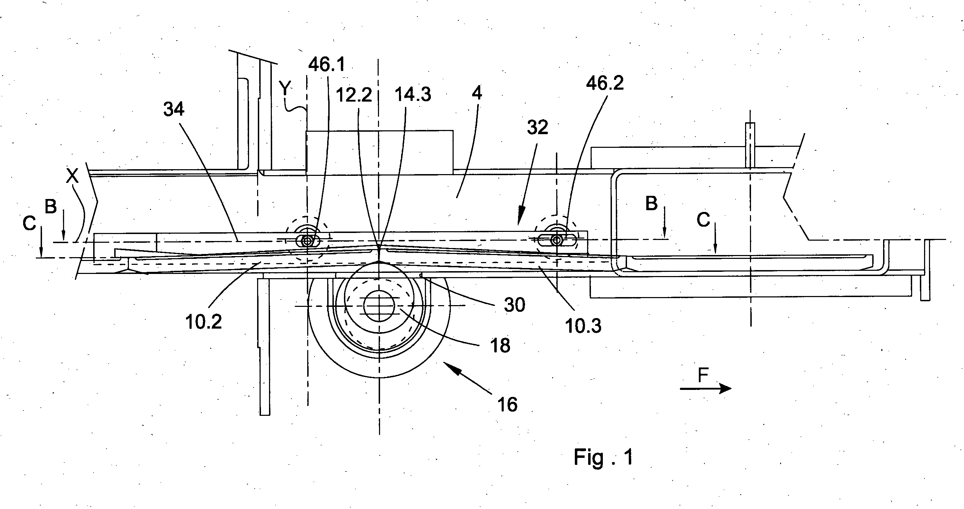

Sur les figures 1 à 5, on peut voir un premier mode de réalisation d'un dispositif selon la présente invention ; ce dispositif est placé à la sortie du four de frittage en amont de l'extraction des sabots en fin de phase de frittage.

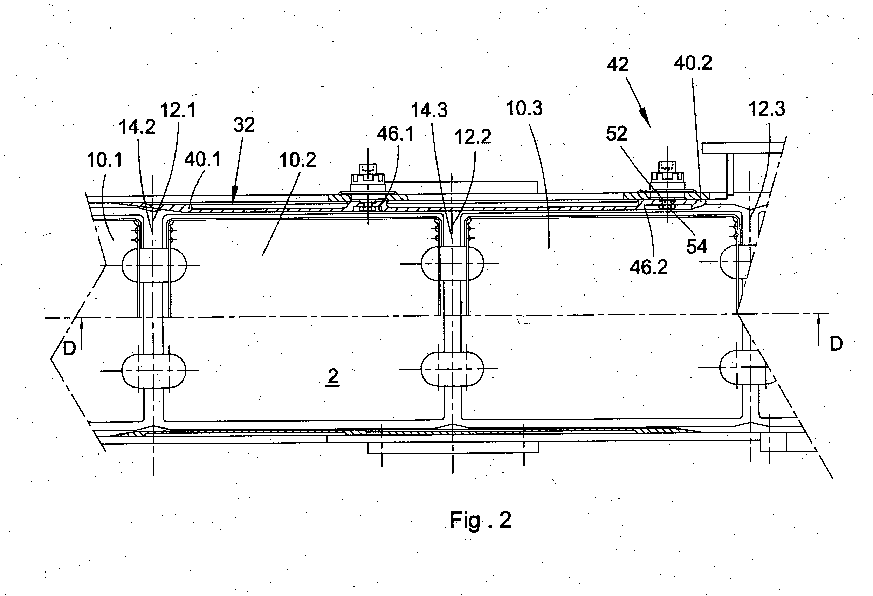

Sur les figures 1 et 2 est représenté un tunnel 2 d'axe X, délimité par des parois latérales 4, et des parois supérieure et inférieure. La paroi inférieure 8 forme un plan de déplacement sensiblement horizontal sur lequel un train de sabots 10.1, 10.2, 10.3 se déplace selon l'axe X dans le sens de la flèche F. Les sabots 10.1, 10.2, 10.3 sont disposés les uns à la suite des autres et sont en appui respectivement par leur face avant 12.1, 12.2, 12.3 contre les faces arrière 14.2, 14.3 des sabots précédents.

Les sabots sont, en vue de dessus, de forme sensiblement rectangulaire et l'appui entre les sabots s'effectue selon des plans orthogonaux à l'axe X. Nous appellerons les faces avant et arrière en contact l'une avec l'autre et éventuellement collées l'une à l'autre, l'interface I.

Ainsi le collage entre les sabots peut avoir lieu le long de tout le plan d'appui défini par l'interface ; le dispositif de séparation selon la présente invention est apte à exercer une contrainte de décollement le long de tout le plan de collage.

Selon le premier mode de réalisation, le dispositif de décollement comporte des moyens 16 (figure 1) aptes à soulever par application d'un effort selon une direction sensiblement verticale vers le haut, de manière sélective, l'interface entre deux sabots selon un axe Y sensiblement orthogonal au plan de déplacement des sabots. L'interface est soulevée relativement aux autres parties des sabots qui sont maintenus sensiblement immobiles selon l'axe Y.

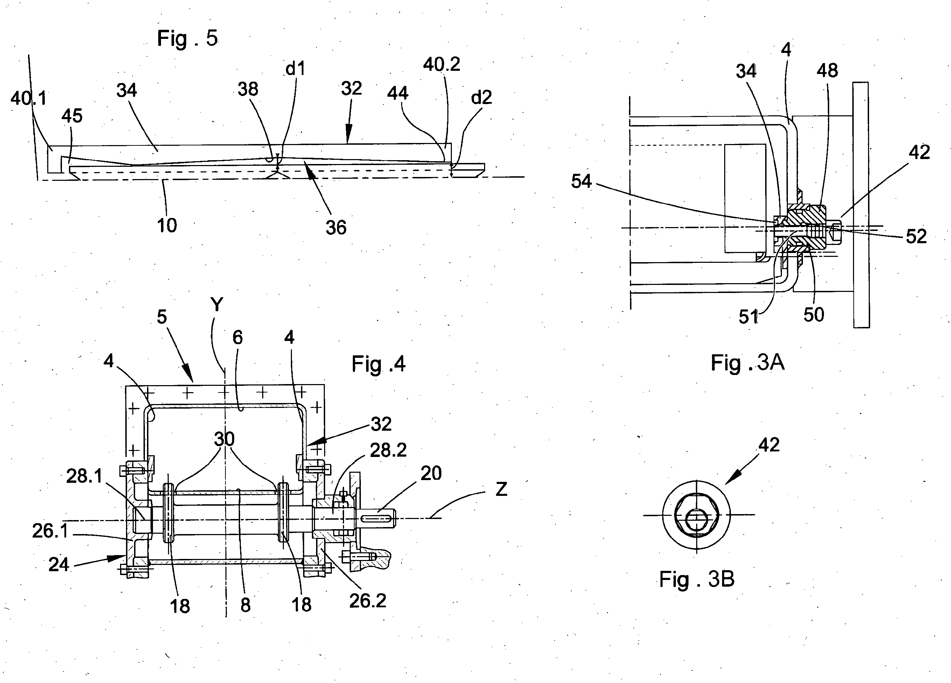

Les moyens de soulèvement 16 comportent un arbre à cames muni d'au moins un excentrique 18, avantageusement deux excentriques (figure 4) solidaires d'un arbre 20 mobile en rotation autour d'un axe Z orthogonal aux axes X et Y et disposé en dessous de la paroi inférieure 8 du tunnel 2.

Plus précisément, l'arbre 20 est monté dans une base 24 d'une structure entourant le tunnel.

La base 24 comporte des montants latéraux 26.1, 26.2 dont l'un 26.1 comporte une cavité dans laquelle est reçue une extrémité 28.1 de l'arbre 20 ; l'autre montant 26.2 comporte un passage traversant dans lequel une deuxième extrémité 28.2 de l'arbre 20 est montée en rotation au moyen de paliers, par exemple des roulements à billes. Un moyen d'entraînement (non représenté) est prévu pour entraîner en rotation l'arbre 20.

La distance entre la périphérie de l'excentrique 18 et l'axe de rotation Z varie entre une valeur minimale au plus égale à la distance séparant l'axe Z de l'arbre 20 et la paroi inférieure 8 et une valeur maximale déterminée pour exercer une contrainte suffisante pour assurer la séparation des faces avant et arrière des sabots.

Comme on peut le voir sur la figure 4, la paroi inférieure 8 comporte des ouvertures 30 pour le passage des excentriques 18, celles-ci étant de forme sensiblement rectangulaire et pratiquées en regard des excentriques 18.

De manière avantageuse, le dispositif comporte des moyens 32 (figures 1 et 5) pour limiter le mouvement des faces avant 12.2 et arrière 14.3 respectives des sabots suivant 10.2 et précédent 10.3 selon l'axe Y commandé par les moyens de soulèvement 16.

Les moyens 32 comportent, avantageusement, deux butées verticales fixées respectivement sur chacune des parois latérales 4 en saillie de celles-ci vers l'intérieur et à une distance déterminée de la paroi inférieure 8 selon l'axe Y.

Ces butées verticales sont, par exemple formées par des réglettes 34 s'étendant selon l'axe X sensiblement sur une longueur égale à deux sabots de part et d'autre de la position des excentriques 18.

Ces réglettes 34 comportent une face inférieure 36 en regard des sabots, munies d'un renfoncement 38 (figures 1 et 5) pratiqué entre une extrémité longitudinale avant 40.2 et une extrémité longitudinale arrière 40.1 de chaque réglette.

Le renfoncement 38 a sensiblement, en vue de côté, la forme d'un V retourné. Les réglettes 34 sont fixées sur les parois latérales 4 à une distance déterminée de la paroi inférieure 8, de manière à ce que la distance d1 séparant le fond du renfoncement 38 de la partie supérieure du sabot lorsque celui-ci repose sur la paroi inférieure 8 soit supérieure au déplacement maximum de l'interface du sabot provoqué par les excentriques 18.

En outre, la distance d2 séparant les extrémités 40.1 et 40.2 des réglettes de la paroi inférieure 8 est légèrement supérieure à l'épaisseur d'un sabot. Ainsi, le déplacement des extrémités 40.1 et 40.2 des sabots selon l'axe Y est limité.

La distance d2 tient compte d'un voile susceptible d'apparaître sur les sabots lors de leur utilisation à haute température ; d2 est par exemple égal à 23 mm pour un sabot d'épaisseur de 18 mm.

Les réglettes 34 limitent le déplacement selon l'axe Y des extrémités des deux sabots 10.2, 10.3 éloignées de l'interface I, ce qui améliore l'efficacité du décollage.

Dans l'exemple représenté, l'extrémité avant 40.2 de la face inférieure 36 de chaque réglette 34 comporte une partie 44 sensiblement parallèle à la paroi inférieure 8 pour recentrer les sabots selon l'axe, et l'extrémité arrière 40.1 de la face inférieure 36 comporte un renfoncement 45 sensiblement en forme de demi-V retourné, autorisant le voile des sabots.

Dans l'exemple représenté, les réglettes sont rapportées sur les parois latérales 4, mais on pourrait prévoir de les réaliser d'un seul tenant avec les parois latérales.

Dans le mode de réalisation représenté et de manière avantageuse, le dispositif comporte également des moyens de réglage 42 (figures 3a et 3b) de la position selon l'axe Y des butées 32, permettant ainsi d'adapter la position des butées en fonction de l'épaisseur du sabot.

Le dispositif selon la présente invention peut ainsi être utilisé pour différents types de sabots.

Les moyens de réglage 42 disposés aux extrémités 40.1 et 40.2 des réglettes sont associés à des moyens de fixation de la réglette sur la paroi latérale 4. En variante, dans le cas d'un dispositif destiné à un seul type de sabots, on peut prévoir une fixation simple par exemple par vis ou par boulons.

Dans l'exemple représenté, les réglettes comportent des lumières 46.1, 46.2 (figures 1 et 2) traversant les extrémités avant et arrière et formées par des fentes axiales permettant un ajustement de la position axiale des réglettes 34 le long de l'axe X relativement aux parois latérales 4.

Les moyens de réglage 42 sont, dans l'exemple représenté, au nombre de deux pour chaque réglette 34. Nous décrirons l'un d'entre eux.

Un moyen de réglage comporte une douille 48 montée en rotation dans un orifice 50 de la paroi latérale 4 du tunnel. La douille 48 comporte un alésage excentré 52 débouchant dans le tunnel ; une tige 51 débouchant dans la fente 46.1 est montée dans l'alésage 52. La tige 51 est munie à son extrémité débouchant dans le tunnel d'une tête 54 de diamètre supérieur à la largeur de la fente 46.1 pour maintenir la réglette 34 contre la paroi. La réglette 34 est alors maintenue entre la tête 54 et la paroi 4.

La tige 51 comporte à son extrémité située à l'extérieur du tunnel un moyen pour modifier sa position angulaire. Dans l'exemple représenté, la tige comporte une tête creuse à six pans, mais on pourrait prévoir une tête en saillie ou une forme type cruciforme ou toute autre forme.

La douille 48 est montée en rotation de manière étanche dans la structure, pour maintenir une pression déterminée à l'intérieur du tunnel.

Nous allons maintenant expliquer le fonctionnement d'un tel dispositif.

Le train de sabots 10 se déplace dans le tunnel 2 sur la paroi inférieure 8 selon la flèche F.

Le dispositif comporte également un détecteur de la présence d'un sabot (non représenté) ; la détection d'un sabot provoque l'actionnement du dispositif de séparation.

Lorsque l'interface I est en regard des ouvertures 30, le déplacement des sabots est suspendu. L'arbre 20 est mis en rotation et la partie excentrée des excentriques soulève l'interface I ; le déplacement des extrémités 14.2, 12.3 des sabots 10.2, 10.3 est limité selon l'axe Y par les réglettes 34.

Les faces supérieures des sabots soulevés suivent respectivement les pentes du renfoncement en V 38. Le soulèvement provoque alors la rupture de la liaison par collage susceptible d'exister entre les faces avant 12.2 et arrière 14.3, décollant ainsi les sabots 10.2 et 10.3.

Dans un exemple de réalisation, le sabot a une largeur de l'ordre de 210 mm et transporte une nacelle de l'ordre de 188 mm de large ; les excentriques opèrent sur une largeur de l'ordre de 160 mm.

On pourrait également prévoir une rotation de manière continue de l'arbre 20 en synchronisant le moyen d'entraînement avec la vitesse de, déplacement des sabots, afin que l'extrémité de l'excentrique la plus éloignée de l'axe de rotation soit en saillie de l'ouverture 30 associée lorsqu'une interface I est en regard desdites ouvertures 30. La circonférence de l'excentrique serait alors choisie sensiblement égale à la longueur selon l'axe X d'un sabot pour qu'un tour de l'excentrique 18 corresponde au déplacement d'un sabot.

Le sabot à extraire l'est ensuite par des moyens adaptés.

Avec ce dispositif, toutes les interfaces entre sabots sont soulevées, même si aucun collage n'est présent.

Dans le mode de réalisation représenté, le dispositif comporte deux excentriques 18, mais on pourrait prévoir un seul excentrique central ou plus de deux excentriques répartis sur la largeur de la paroi inférieure 8.

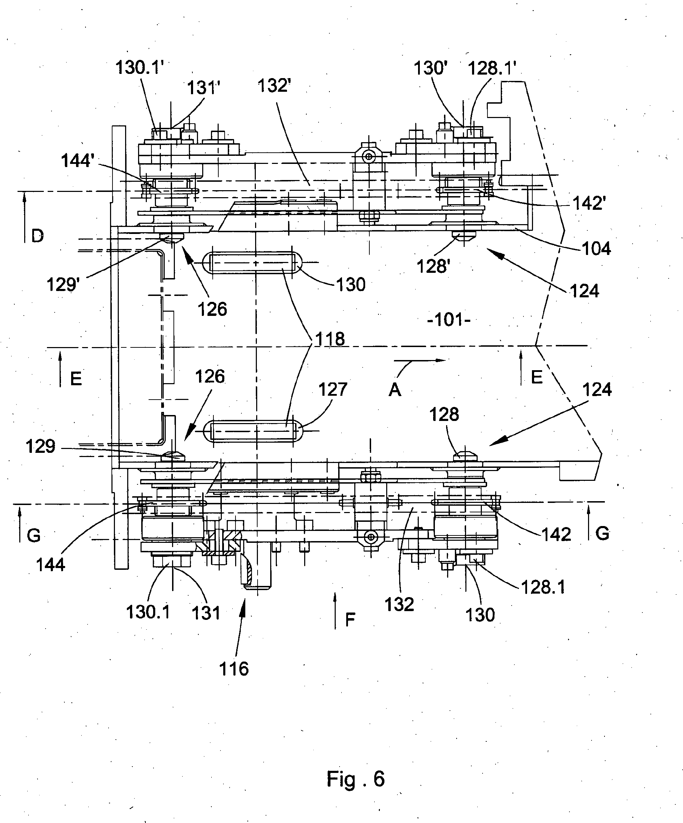

Sur les figures 6 à 13, on peut voir un deuxième mode de réalisation d'un dispositif de séparation de sabots selon la présente invention comportant également un arbre à cames disposé sous la paroi inférieure du tunnel ; toutefois dans ce cas les excentriques n'agissent pas au niveau de l'interface mais à proximité de celle-ci sur un seul des deux sabots.

Sur la figure 6, on peut voir le dispositif selon le deuxième mode de réalisation, en vue de dessus, placé dans un canal de sortie 101 d'un four de frittage.

Le canal de sortie est formé par un tunnel 102 délimité par des parois latérales 104, une paroi supérieure et une paroi inférieure 108 formant une surface de déplacement d'un train de sabots 110.

Comme dans le premier mode de réalisation, le dispositif de séparation exerce un effort vertical, pour cela il comporte un arbre à cames 116 disposé en dessous de la paroi inférieure 108 et muni d'excentriques 118 destinés à venir en saillie au dessus de la paroi inférieure 108 au travers d'ouvertures 127 formées dans celle-ci.

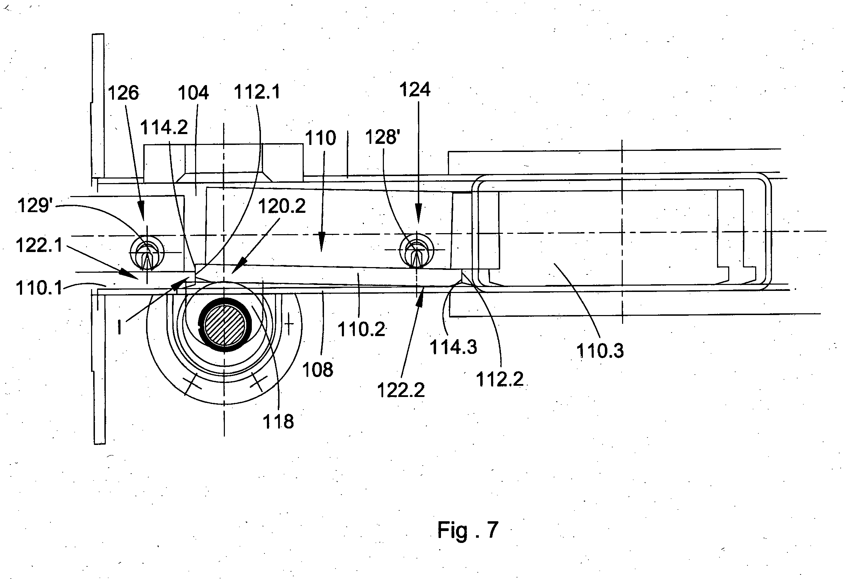

Sur la figure 7, est représenté un train de sabots comportant des sabots 110.1, 110.2 et 110.3. Les faces avant 112.1, 112.2 des sabots 110.1, 110.2 respectivement sont en appui contre les faces arrière 114.2, 114.3 des sabots 110.2, 110.3 respectivement.

Le dispositif peut comporter également un moyen de détection (non représenté) de l'interface I entre deux sabots, tel qu'un capteur.

Le dispositif comporte également un détecteur de la présence d'un sabot (non représenté) ; la détection d'un sabot provoque l'actionnement du dispositif de séparation.

Le dispositif est prévu dans ce mode de réalisation pour que les excentriques viennent en contact avec une partie 120.2 du sabot 110.2 située à proximité de l'interface I et non directement avec l'interface I. Cette partie 120.2 se trouve dans l'exemple représenté en figure 7 en aval de l'interface I dans le sens de déplacement du train de sabot indiqué par la flèche A, mais on pourrait prévoir que les excentriques viennent en contact avec une partie 122.1 du sabot 110.1 située en amont de l'interface I.

L'action des excentriques sur la partie 120.2 provoque le soulèvement de l'extrémité arrière 112.2 du sabot correspondant.

De manière avantageuse, le dispositif selon la présente invention comporte des moyens 124 aptes à limiter le déplacement selon la direction Y, de l'extrémité 122.2 du sabot 110.1 éloignée de la partie 120.2 destinée à être soulevée.

Le dispositif comporte également des moyens 126 pour limiter le déplacement de la partie 122.1 du sabot 110.1 précédent selon l'axe Y, susceptible d'être collée au sabot 110.2. Ainsi en exerçant un effort de poussée vers le haut sur la partie 122.1 d'un sabot 110.2 et en maintenant l'autre sabot 110.1 en position selon l'axe Y, le décollement des deux sabots 110.1, 110.2 est amélioré et rendu plus rapide.

Les moyens 124,126 sont formés chacun par deux excentriques 128, 128', 129, 129' liés respectivement en rotation avec un arbre 130, 130', 131, 131' et montés chacun en rotation dans une paroi latérale 104 à une distance déterminée de la paroi inférieure, de manière à ce que la distance minimale entre la périphérie de l'excentrique et la paroi inférieure soit légèrement supérieure à l'épaisseur du sabot, pour éviter un contact entre la périphérie de l'excentrique et le sabot, et un risque de blocage.

Les sabots ont une épaisseur, par exemple de 18 mm. En outre, le sabot peut, du fait de son utilisation à haute température, être voilé. Il est alors prévu un jeu supplémentaire de 5 mm pour tenir compte du voilage. Ainsi on peut prévoir une distance de 23 mm entre la périphérie de l'excentrique et la paroi inférieure pour assurer un fonctionnement correct du dispositif de séparation.

Les arbres 130, 131 sont montés dans des paliers 133, 135, respectivement traversant les parois latérales. Les arbres 130' et 131' sont également montés dans des paliers non représentés.

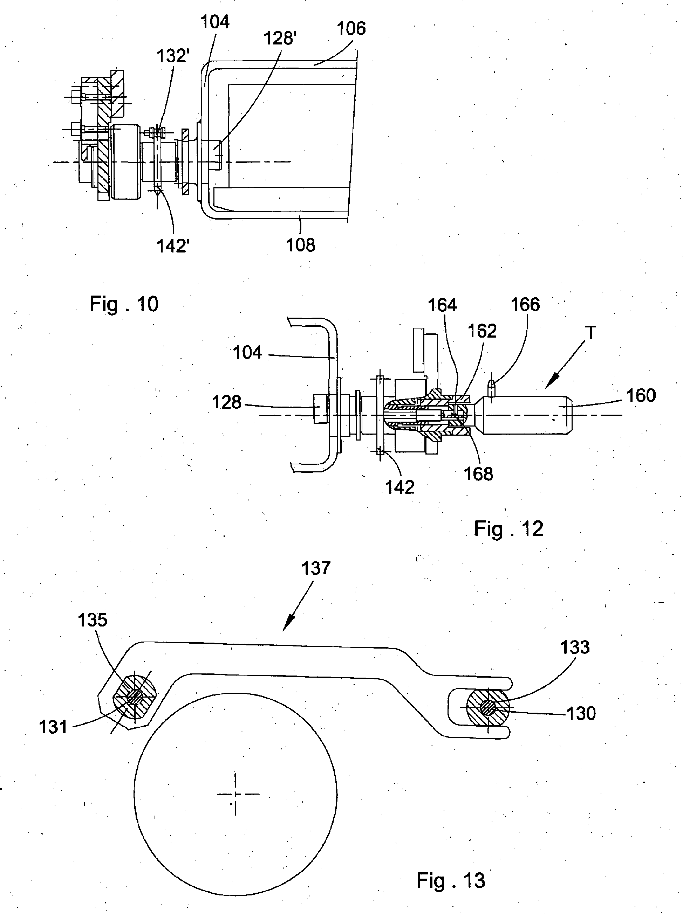

Les paliers sont maintenus immobiles en rotation par rapport à la paroi latérale qu'ils traversent. Dans l'exemple représenté, une clé, 137 dite anti-rotation lie les paliers 133, 135. Celle-ci est visible sur la figure 13, elle comporte des orifices à ses extrémités correspondant aux contours extérieurs des paliers, ces contours comportant au moins un méplat. Une clé similaire lie en rotation les paliers des arbres 130' et 131'.

Les excentriques 128, 128' et 129, 129' sont montés sensiblement en regard dans les parois droite et gauche en considérant le sens de déplacement des sabots selon la flèche A.

Il est prévu des moyens pour synchroniser la rotation des excentriques 118 et des excentriques 128, 128', 129, 129', de manière à ce que la partie excentrée de tous les excentriques soit orientée vers les sabots simultanément.

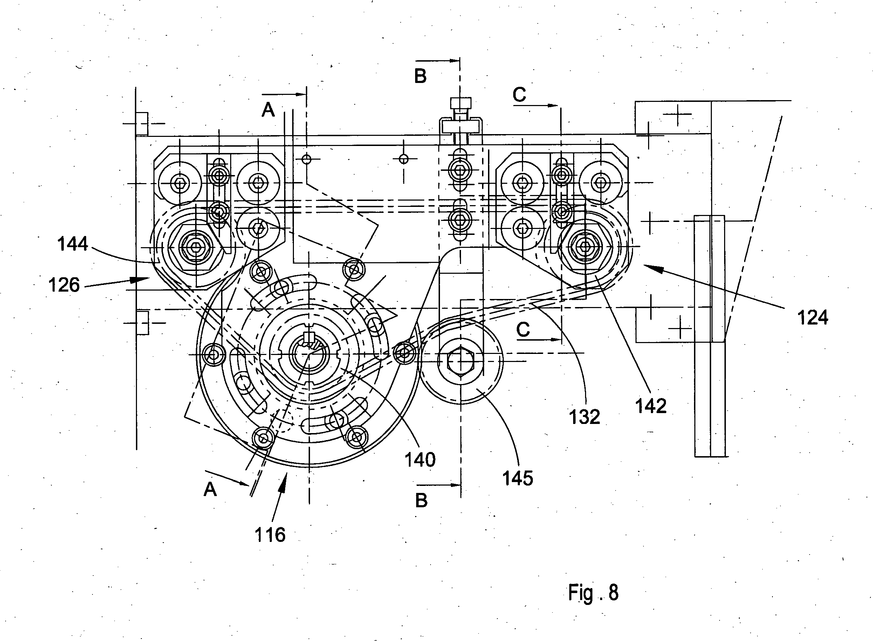

De manière avantageuse, les excentriques 118, 128, 128' et 129, 129' sont entraînés par un seul moyen d'entraînement (non représenté) par l'intermédiaire d'une chaîne 132 visible sur la figure 8, par exemple du type chaîne à rouleaux ; une courroie crantée pourrait également convenir.

De manière avantageuse, les arbres 130, 130', 131, 131' comportent un index de repérage 128.1, 128.1', 131.1, 131.1' de la position angulaire des excentriques 128, 128', 129, 129'. Cet index est monté sur une extrémité longitudinale de l'arbre 130, 130', 131, 131' opposée à celle portant l'excentrique 128, 128', 129, 129'.

La chaîne est montée autour de roues dentées 140, 140', 142, 142', 144, 144' solidaires respectivement de l'arbre 117 portant les excentriques 118 et des arbres 130, 130', 131, 131' des excentriques 128, 128', 129, 129'.

Un tendeur 145 est prévu pour maintenir la chaîne 132 tendue, par exemple un tendeur à billes.

Le nombre de dents des roues dentées 140, 142, 144 et 140', 142', 144' est déterminé pour synchroniser le déplacement des excentriques 118, 128, 128', 129, 129'.

La synchronisation est alors réalisée de manière simple, puisqu'il suffit de régler correctement la position des excentriques au moment du montage du dispositif ; le contrôle du déplacement relatif des excentriques est ensuite assuré par la chaîne 132.

Le dispositif comporte une chaîne 132 sur un côté droit dans le sens de déplacement des sabots indiqué par la flèche A, pour entraîner les excentriques 128, 129 sur la paroi latérale droite et une chaîne 132' sur un côté gauche pour entraîner les excentriques 128', 129' sur la paroi latérale gauche.

Le moyen d'actionnement entraîne directement l'arbre,117 par une extrémité 134, mais on pourrait prévoir qu'il entraîne directement l'un ou l'autre des moyens 124, 126 ; l'arbre 117 serait alors entraîné par l'intermédiaire de la chaîne 132.

On pourrait également prévoir que le moyen d'entraînement n'entraîne directement que la chaîne 132.

La roue dentée 140' est montée solidaire en rotation d'une extrémité 136 de l'arbre 117 opposée à l'extrémité 134 reliée au moyen d'actionnement.

Les roues dentées 142, 142', 144, 144' sont solidarisées aux arbres 130, 130', 131, 131' respectivement par l'intermédiaire d'une douille d'entraînement 146, 146', 148, 148'.

Nous décrirons par la suite l'ensemble pignon 142, douille 146 et arbre 130, les autres ensembles roue dentée-douille-arbre étant sensiblement identiques.

La roue dentée 142 est munie d'une couronne dentée 150 sur son contour extérieur et fixée par son contour intérieur sur un manchon 152, avantageusement réalisé d'un seul tenant avec la couronne 150.

L'arbre 130 est solidarisé en rotation avec le manchon 152 par l'intermédiaire d'une douille d'entraînement 154, solidaire en rotation par sa périphérie extérieure avec le manchon 152 et par sa périphérie intérieure avec l'arbre 130.

La douille 154 comporte, par exemple une empreinte octogonale sur sa périphérie intérieure, et une empreinte décagonale sur sa périphérie extérieure aptes coopérer avec des empreintes correspondantes pratiquées dans la périphérie intérieure du manchon 150 et dans l'arbre 130.

Un écrou 141 est monté sur l'arbre en appui contre une extrémité de la douille 154 pour la maintenir en position longitudinale sur l'arbre 130.

Sur la figure 12, on peut voir un outil T de réglage de la position des excentriques 128, 128', 129, 129'.

L'outil T comporte un manche 160 de manipulation et une bague 162. De manière avantageuse, le manche de manipulation 160 et la bague 162 sont indépendants.

Le manche 160 comporte un premier élément 164 pour solidariser en rotation l'arbre 130 et le manche 160, formé dans l'exemple représenté par une goupille montée fixe dans une extrémité longitudinale du manche 160 perpendiculairement à l'axe du manche. Le manche 160 comporte un deuxième élément 166 formant élément de repérage de la goupille 164, formé par une deuxième goupille montée dans le manche 160, orientée de manière identique à la première goupille 164. Ainsi la position angulaire de la deuxième goupille 166 est celle de la première goupille. Ainsi lorsque la première goupille est montée dans l'arbre 130, l'opérateur manipulant l'outil T connaît la position angulaire de la première goupille 164 en regardant la deuxième goupille 166.

Nous allons décrire le réglage de la position angulaire des excentriques au moyen de l'outil T.

L'index 128.1 et l'écrou d'extrémité 141 disposé sur l'arbre 130 sont retirés.

La chaîne d'entraînement peut être également déposée, mais cela n'est pas nécessaire.

La première goupille 164 portée par le manche 160 est positionnée dans une empreinte 168 pratiquée dans l'extrémité de l'arbre 130 portant l'écrou 141. L'empreinte 168 est orthogonale à l'axe de l'arbre 130. L'empreinte 168 est, par exemple formée par un méplat.

La bague 162 est alors vissée dans la douille 154. L'opérateur retire ensuite la douille 154 axialement vers l'extérieur, ce qui lui permet de la faire tourner autour de son axe, il peut alors décaler angulairement l'excentrique 128 dans un premier sens de rotation ou dans un deuxième sens de rotation, en utilisant les décalages angulaires de la forme en décagone et en octogone de la douille 154. Ce réglage s'effectue en s'assurant de la position des autres axes excentrés 128.

Ainsi, il est possible d'optimiser les positions angulaires de chaque excentrique 128, 128', 129, 129', pour qu'ils fonctionnent ensemble avec la même orientation.

Lorsque la position est obtenue, l'opérateur réintroduit la douille 154 dans le palier 150, et dévisse la bague 164, et retire enfin le manche 160.

L'écrou 141 est remis en place ainsi que l'index 128.1, et la chaîne si elle a été déposée.

Ce réglage est effectué pour chacun des autres excentriques 128', 129', 129'.

Nous allons maintenant décrire le fonctionnement de ce dispositif de séparation.

A l'arrivée d'une interface, le déplacement des sabots est suspendu et le moyen d'actionnement est activé.

Celui-ci provoque la mise en rotation de l'arbre 117 portant les excentriques 118 et des roues dentées 142, 142', 144, 144', entraînant en rotation les excentriques 128, 128', 129, 129' respectivement.

Les excentriques 118 provoquent alors le soulèvement de la partie arrière 120.2 du sabot 110.2, tandis que les excentriques 128, 128' limitent le déplacement de la partie avant 122.2 du sabot 110.2, et que les excentriques 129, 129', limitent le déplacement de la partie avant 122.1 du sabot 110.1.

La liaison entre les faces avant 112.1 et arrière 114.2 des sabots 110.1, 110.2 respectivement est ainsi rompue ; le sabot 110.2 peut être évacué.

Des moyens de détection de la séparation des sabots sont avantageusement prévus, ils sont par exemple formés par un capteur de proximité magnétique situé au bout d'un canal d'évacuation des sabots.

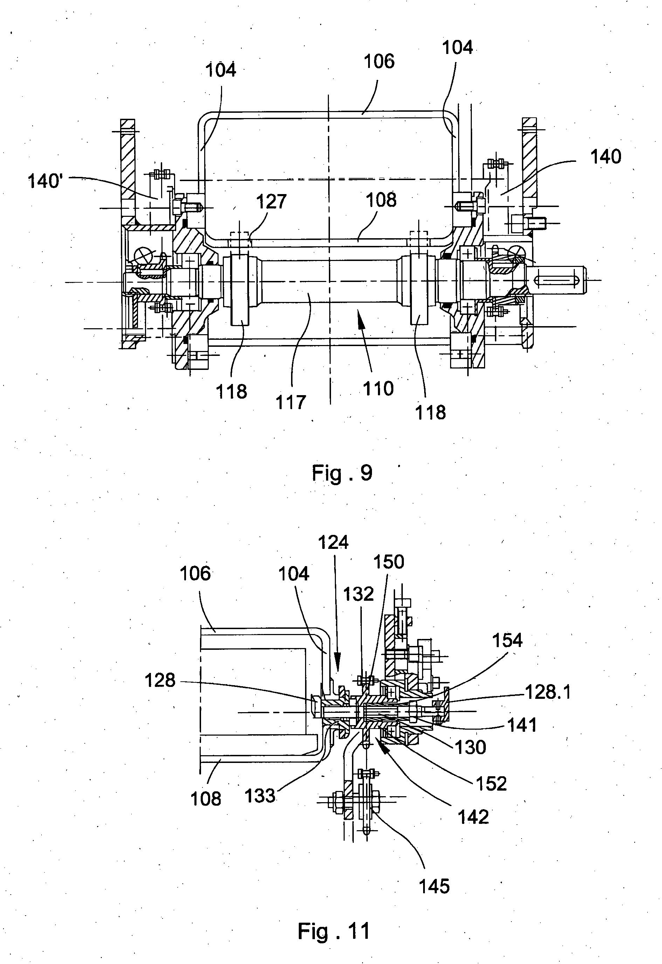

On pourrait prévoir un seul excentrique 118, avantageusement de largeur plus grande que celle des excentriques représentés sur la figure 6 ou 9, pour améliorer la stabilité des sabots, cependant ceux-ci entraîneraient une usure plus importante et requerraient des actionneurs plus puissants.

En outre, l'utilisation de deux excentriques assure une certaine stabilité des sabots lorsqu'ils présentent un voile issue de la déformation.

On pourrait également prévoir au moins deux moyens d'entraînement des excentriques, l'un pour les excentriques 118 et l'autre pour les excentriques 128, 128', 129, 129' ou même un moyen d'actionnement distinct pour chacune des paires d'excentriques ou pour chaque excentrique. Un moyen de synchronisation entre les différents moyens d'entraînement serait alors à prévoir.

Il est également envisageable de prévoir une séparation des sabots simultanément à leur déplacement, par exemple en ralentissant leur déplacement.

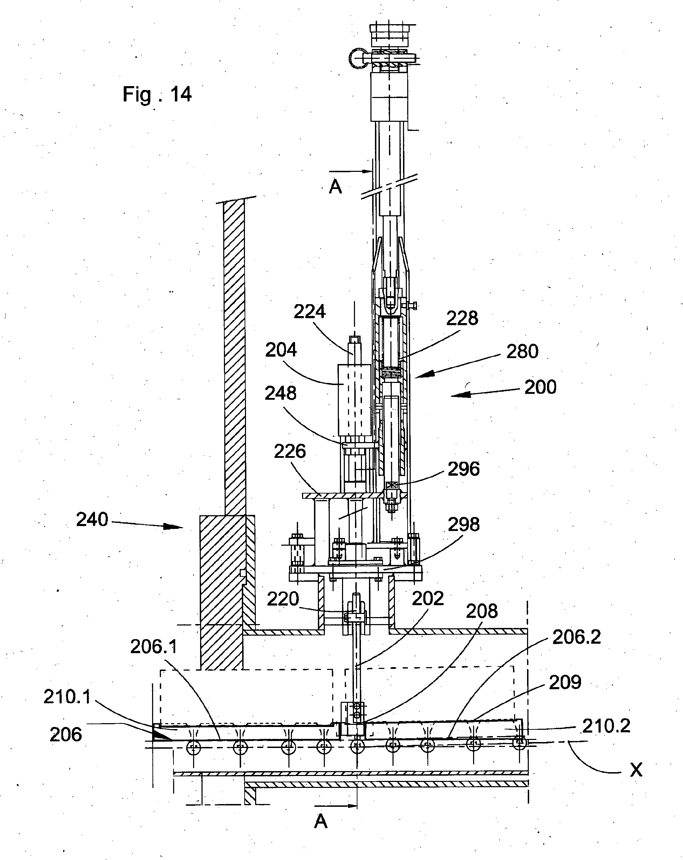

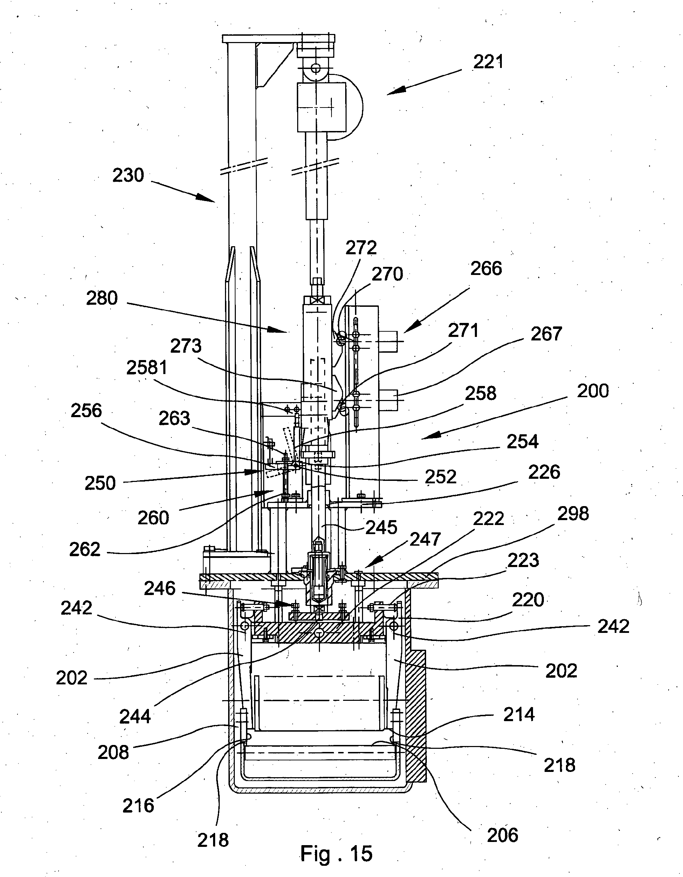

Sur les figures 14 à 18, on peut voir un troisième mode de réalisation d'un dispositif selon la présente invention, dans lequel il est prévu la chute d'une masse par gravité, dont le choc provoque une rupture de la liaison entre les sabots.

Le dispositif selon le troisième mode de réalisation, est également disposé à la sortie du tunnel de frittage, comme pour les modes de réalisation précédents.

Le dispositif comporte des moyens de séparation 200 pour appliquer un choc mécanique selon une direction verticale orienté vers le bas apte à rompre le collage entre le sabot 210.2 à évacuer et le sabot suivant 210.1.

Les moyens de séparation 200 comportent au moins un bras, avantageusement deux bras 202, tels que représentés sur la figure 14, pour maintenir le sabot et transmettre le choc mécanique provoqué par la chute d'une masse 204.

Les bras 202 s'étendent sensiblement perpendiculairement à une surface de glissement 206 des sabots et viennent en appui par leur extrémité inférieure 208 sur des rives latérales 209 du sabot 210.2.

De manière avantageuse, les extrémités 208 du bras 202 comportent un décrochement formant une portée 214 apte à venir en appui sur la surface supérieure 209 du sabot 210.2 et une surface 216 sensiblement perpendiculaire à la portée 214 pour venir en appui sur une surface latérale 218 du sabot.

Les deux bras 202 sont symétriques par rapport à un plan médian contenant un axe de déplacement X des sabots. Ainsi le sabot 210.2 est à la fois maintenu latéralement et selon un plan horizontal.

Chaque bras 202 est déplaçable de manière sensiblement verticale par un dispositif de déplacement 221.

Les deux bras 202 sont fixés par une extrémité supérieure 242 opposée à celle destinée à venir en contact avec le sabot, à un palonnier 222 apte à être déplacé selon une direction sensiblement verticale par rapport à un châssis 240, de manière à appliquer les bras contre le sabot ou à les en éloigner.

Les doigts 202 sont montés mobiles par leur extrémité 242 en rotation sur le palonnier 222 ; une butée 223 est prévue pour régler l'écartement de l'extrémité inférieure des doigts par rapport à l'emplacement des sabots.

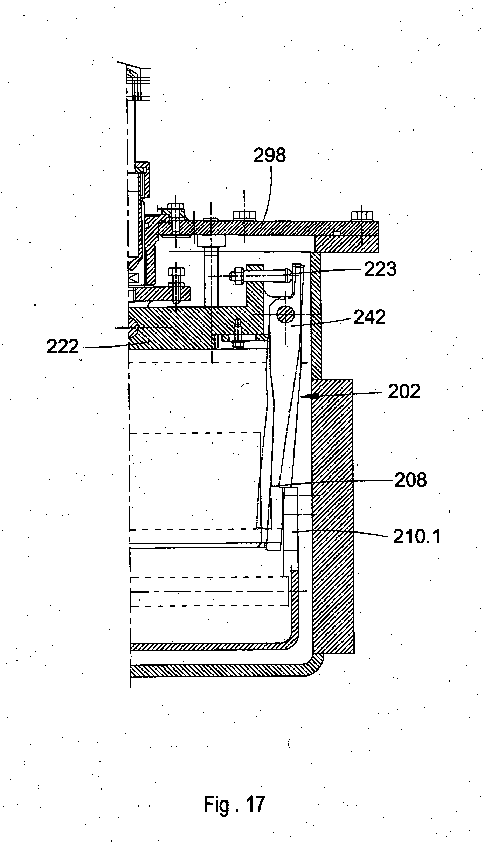

De manière avantageuse, les bras 202 ont une position au repos, c'est-à-dire écartée d'un sabot, légèrement rentrée vers l'intérieur du palonnier, en pointillés sur la figure 17, au moyen d'un ressort monté en réaction entre le palonnier 222 et la butée 223 montée coulissante dans le palonnier 222.

De manière avantageuse, les extrémités 208 comportent des chanfreins permettant un centrage automatique du palonnier 222.

Le palonnier 222 est monté articulé sur un dispositif de déplacement 221, à une extrémité d'un axe 245 dans sa partie centrale 244.

Des moyens 246 pour limiter le battement transversal du palonnier 222 sont prévus entre le palonnier 222 et le châssis 240, ainsi que des moyens anti-rotation 247 de celui-ci.

Dans l'exemple représenté, le dispositif de, déplacement 221 est, par exemple un actionneur linéaire du type vérin électrique, suspendu à un mât 230.

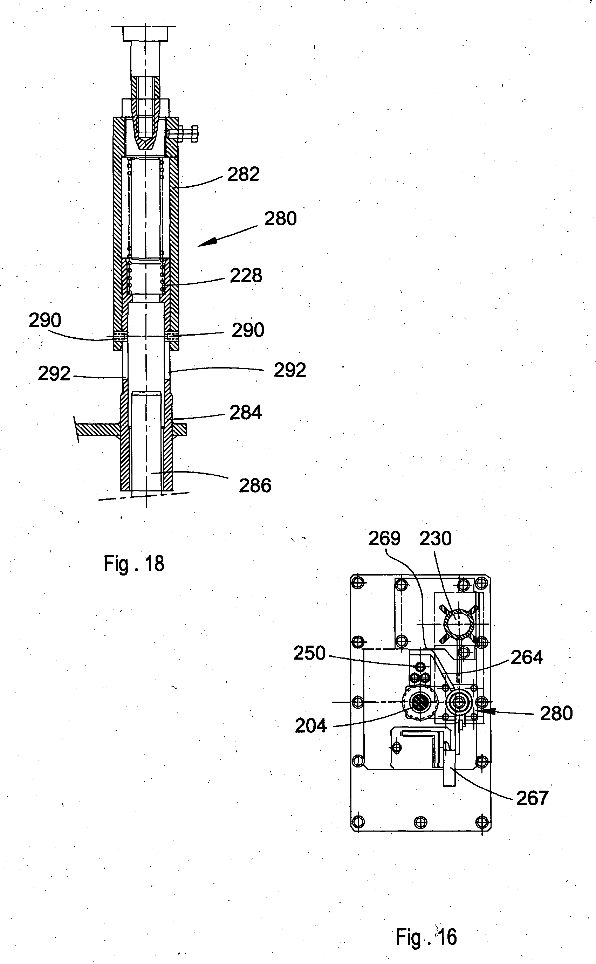

L'actionneur 221 est relié au palonnier par l'intermédiaire d'un bras de transmission 280 de longueur variable, qui peut être vu en détail sur la figure 18. Le bras 280 comporte un manchon extérieur 282 fixé à une extrémité du vérin, un manchon intérieur 284 apte à coulisser dans le manchon extérieur 282, un axe 286 apte à coulisser dans le manchon intérieur 284 et un moyen élastique, par exemple un ressort hélicoïdal 228 monté dans le manchon extérieur 282, entre le manchon extérieur 282 et le manchon intérieur 284.

Dans l'exemple représenté, l'axe 286 est monté coulissant dans le manchon intérieur 284 par l'intermédiaire de bagues 288.

Des goupilles 290 sont prévues pour limiter le déplacement axial entre le manchon intérieur 284 et le manchon extérieur 282, lesdites goupilles 290 étant fixées dans le manchon extérieur 284, et pénétrant respectivement dans une lumière axiale 292 réalisée dans le manchon intérieur 284.

Dans l'exemple représenté, le ressort 228 est en appui contre une saillie annulaire 294 radialement interne du manchon intérieur 284. On pourrait prévoir que le ressort 228 soit en appui sur une extrémité longitudinale du manchon intérieur 284.

L'axe 286 est fixé par une extrémité inférieure 296 à une plaque 226 immobile par rapport au châssis 240, pour former un axe de guidage pour les manchons extérieur 282 et intérieur 284.

Tant que l'effort de réaction des sabots sur le palonnier 22 est inférieur à la charge du ressort 228, le manchon extérieur 282 et le manchon intérieur 284 forme un ensemble rigide ; lorsque l'effort de réaction devient supérieur à la charge du ressort, le manchon extérieur 282 coulisse autour du manchon intérieur 282 provoquant une déformation du ressort et l'application d'une précontrainte au sabot 210.2.

La masse 204 est montée de manière coulissante selon une direction sensiblement verticale autour d'un axe 224 disposé parallèlement au bras de transmission 280. La masse 204 repose sur une plaque 248 solidaire en mouvement de l'axe du palonnier 245, sensiblement orthogonale à l'axe de coulissement du vérin. Ainsi, la masse 204 peut être soulevée le long de l'axe 224 par le déplacement ascendant du manchon extérieur 282.

L'axe 224 est monté coulissant dans la plaque 226 et dans un couvercle 298 du tunnel de frittage pour se raccorder au palonnier dont il est solidaire axialement.

L'axe 224 coulisse de manière étanche dans le couvercle 298 afin d'isoler l'intérieur du tunnel et l'environnement extérieur. Cette étanchéité est obtenue, par exemple avec un joint quadrilobe en nitrile.

Le dispositif comporte également une équerre 250 montée mobile en rotation sur le châssis 240 autour d'un axe 252 au niveau d'un coin 254 de l'équerre raccordant des branches 256, 258.

Ladite équerre est destinée à maintenir pendant un court instant la masse 204 en position suspendue par rapport à la plaque 248, avant que celle-ci ne chute par gravité pour venir frapper la plaque 248. La masse repose pendant cet instant sur une extrémité supérieure 2581 de la branche 258.

L'équerre 250 est apte à être escamotée pour libérer la masse 204.

Des moyens de rappel 260 en position repos de l'équerre sont prévus, ceux-ci sont formés, dans l'exemple représenté, par une tige 262 solidaire du châssis 240, dont une extrémité 263 traverse la branche 258 et un moyen élastique, interposé entre la plaque 226 et la branche 258. Ainsi la branche 258 est toujours sollicitée en direction de l'axe 224 de coulissement de la masse 204.

Des moyens de capteur 266, 267 sont prévus pour détecter les différentes positions du vérin, notamment le capteur 266 détecte la position repos du vérin ou « position haute » et le capteur 267 détecte la position du vérin lorsque les bras 202 sont en appui sur le sabot. Dans l'exemple représenté, les capteurs 266, 267 sont du type à came, ils comportent un élément 270, 271 apte à se déplacer le long d'une surface de came 272, 273 associée comportant une inclinaison variable, lesdites surfaces de came 272, 273 étant solidaires en déplacement du manchon extérieur 282. L'élément 270,271, est dans l'exemple représenté, une roue mobile en rotation sur un bras lui-même mobile. Le mouvement du bras permet de repérer la position du manchon extérieur.

Sur la figure 16, on peut voir un brin 264 solidaire en mouvement de la roue du deuxième capteur 267 s'étendant sensiblement perpendiculairement à l'axe du vérin. Ce brin 264 permet l'escamotage de l'équerre 250.

Le brin 264 comporte une extrémité 269 repliée, apte à venir en appui sur la branche 256 de l'équerre, pour faire basculer l'équerre autour de son axe 252 vers l'extérieur, provoquant l'écartement de la branche 258 de l'axe de la masse 204 et la libération de celle-ci.

De manière avantageuse, il est prévu une inclinaison d'une partie de la surface inférieure 206 sur laquelle se déplacent les sabots, améliorant l'effet provoqué par la chute de la masse 204. En effet, la surface inférieure 206 n'est pas plane et une portion 206.2 sur laquelle se trouve le sabot 210.2 est inclinée vers le bas dans le sens de déplacement des sabots par rapport à une portion 206.1 sur laquelle se trouve le sabot 210.1.

Le dispositif comporte également un détecteur de la présence d'un sabot (non représenté) ; la détection d'un sabot provoque l'actionnement du dispositif de séparation.

De manière avantageuse, le dispositif prévoit de détecter une extrémité longitudinale d'un sabot en aval du sabot sur lequel les bras vont venir en appui, le sabot en aval ayant déjà subi le processus de libération tel qu'il va être décrit, l'extrémité du sabot aval étant avantageusement opposée au sabot amont. Le détecteur est du type codeur.

Nous allons maintenant décrire le fonctionnement d'un tel dispositif.

Lorsque l'extrémité du sabot aval est détectée, le déplacement du train de sabots est suspendu.

Le vérin électrique est actionné, provoquant le déplacement selon la direction B vers le bas du manchon extérieur 282 et du manchon intérieur 284. Leur déplacement provoque la descente de l'axe 224 par l'intermédiaire de la patte transversale. L'axe 224 coulisse dans la plaque 226 et le couvercle 296. Le palonnier est alors abaissé, les bras 202 s'écartent et l'extrémité inférieure 208 des bras 202 vient en appui sur les rives du sabot 210.2.

Lorsque le contact entre les bras et le sabot est établi, le déplacement du palonnier 222 s'arrête, cependant le vérin est toujours actionné, provoquant la déformation du ressort 228, le manchon intérieur 284 coulisse dans le manchon extérieur 282, appliquant une contrainte prédéterminée au sabot 210.2.

Lorsque la contrainte prédéterminée est atteinte, le déplacement du vérin est arrêté. L'arrêt est commandé par le deuxième capteur 267.

Lorsque les manchons extérieurs 282 et intérieurs 284 descendent, la masse 204 suit leur mouvement pendant une course déterminée, puis vient en appui sur l'extrémité supérieure 2581 de la branche 258 de l'équerre 250.

Les manchons extérieurs 282 et intérieurs 284 poursuivent leur descente, la masse 204 est alors suspendue à l'équerre 250.

La roue du deuxième capteur 267, de laquelle est solidaire du brin 264, est déplacée du fait du déplacement de la surface de came associée, le brin 264 vient alors en contact avec la branche 256, provoquant le basculement vers l'extérieur de l'équerre 250 et la libération de la masse 204, celle-ci chute par gravité sur la plaque 248, le choc est transmis à l'axe du palonnier 245 et aux bras 202 en contact avec J le sabot, les bras appliquent alors au sabot un effort sensiblement vertical vers le bas, qui subit alors un déplacement dans le plan vertical par rapport au sabot amont, ce qui provoque la rupture de la liaison éventuelle par collage entre les sabots 210.1 et 210.2.

L'ordre est ensuite donné à l'actionneur de remonter le vérin, qui emporte les manchons 282, 284, le palonnier 222, ainsi que la masse 204 par l'intermédiaire de la patte 248. Le manchon extérieur 282 reprend sa position initiale par rapport au manchon intérieur 284.

L'équerre 250 reprend sa position lors de la remontée et notamment au moment où la branche 256 libère le brin 264.

L'avance des sabots est réenclenchée.

Des moyens de réglage sont avantageusement prévus pour synchroniser le moment auquel le lâcher de la masse 204 a lieu et le moment auquel la précontrainte prédéterminée est atteinte.

Dans l'exemple représenté, les surfaces 206.1 et 206.2 sur lesquelles se trouvent respectivement les sabots 210.1, 210.2, étant inclinées l'une par rapport à l'autre, la rupture de la liaison entre les sabots 210.1 et 210.2 en est facilitée.

On pourrait prévoir de maintenir le sabot suivant 210.1 et d'appliquer le choc à ce sabot.

Les dispositifs selon les trois modes de réalisation sont de fonctionnement simple et efficace, et évitent toute détérioration des sabots 210.

## Revendications

1. Dispositif comportant des moyens de séparation d'au moins deux sabots (10.2, 10.3, 110.1, 110.2, 210.1, 210.2) de transport de pastilles de combustible nucléaire aptes à se déplacer selon un premier axe (X) et dont deux faces d'extrémité sont en contact l'une contre l'autre, lesdits sabots étant solidarisés par collage, lesdits moyens de séparation étant aptes à déplacer au moins l'un des deux sabots, à proximité des dites faces d'extrémité en contact, selon un deuxième axe (Y) vertical sensiblement orthogonal au premier axe (X), de sorte à rompre la liaison par collage entre les sabots.

2. Dispositif selon la revendication 1, comportant des moyens de capteur (266, 267) pour détecter la présence de sabots, lesdits moyens étant aptes à détecter la présence d'un sabot aval prêt à être évacué.

3. Dispositif selon la revendication 1 ou 2, dans lequel les moyens de séparation comportent au moins un excentrique (18, 118) apte à venir en contact avec une surface inférieure d'au moins un sabot pour la soulever le long du deuxième axe (Y), et dans lequel le contact entre le au moins un excentrique (18) et le au moins un sabot (10.2, 10.3) s'effectue au niveau de l'appui entre les faces d'extrémité en contact (12.2, 14.3) des deux sabots (10.2, 10.3)., ou le contact entre le au moins un excentrique (118) et le au moins un sabot (110.1, 110.2) s'effectue sur un premier (110.2) des sabots à proximité des faces d'extrémité en contact des deux sabots (110.1, 110.2).

4. Dispositif selon l'une quelconque des revendications 1 à 3, comportant des moyens (32, 124) pour limiter le déplacement d'au moins une extrémité d'un sabot selon le deuxième axe (Y).

5. Dispositif selon la revendication 4, dans lequel ladite extrémité dont le déplacement est limité du côté opposé à l'extrémité soulevée.

6. Dispositif selon la revendication 4, dans lequel les moyens (124) pour limiter le déplacement selon le deuxième axe (Y), limitent simultanément le déplacement d'une extrémité (122.2) du premier sabot éloignée de la partie soulevée (120.2), et le déplacement d'une extrémité (122.1) de l'autre sabot du côté des faces d'extrémité en contact des deux sabots.

7. Dispositif selon la revendication 6, dans lequel les moyens (126) pour limiter le déplacement selon le deuxième axe (Y) comportent des excentriques de limitation de déplacement (128, 128', 129, 129') aptes à se rapprocher d'une surface supérieure des sabots pour limiter leur soulèvement par rapport à la partie (120.2) destinée à être soulevée.

8. Dispositif selon la revendication 7, dans lequel les déplacements en rotation des excentriques (128, 128', 129, 129') de limitation de déplacement et des excentriques (118) de soulèvement sont synchronisés de manière à ce que les excentriques de limitation de déplacement (128, 128', 129, 129') et les excentriques de soulèvement (118) se rapprochent simultanément des surfaces supérieures et inférieures des sabots respectivement.

9. Dispositif de séparation selon la revendication 1 ou 2, dans lequel les moyens de séparation sont aptes à exercer un choc sur au moins un premier sabot (210.2) à proximité des faces d'extrémité en contact des deux sabots.

10. Dispositif selon la revendication 9, dans lequel les moyens de séparation comportent des bras (202) pour maintenir le premier sabot (210.2) latéralement et transmettre le choc au premier sabot (210.2), lesdits bras (202) étant appliqués sur le premier sabot par un vérin (221).

11. Dispositif selon la revendication 10, dans lequel le choc est appliqué par une masse (204) qui chute par gravité, la masse (204) étant libérée lorsqu'une contrainte prédéterminée est appliquée au premier sabot (210.2) par les bras (202) destinés à être en appui sur le sabot.

12. Dispositif selon la revendication précédente, comportant des moyens (250) pour suspendre la masse (204) et des moyens pour escamoter lesdits moyens de suspension (250).

13. Dispositif selon la revendication précédente, dans lequel les moyens d'escamotage sont commandés par un deuxième capteur (267) qui détecte que la contrainte prédéterminée est atteinte, ledit second capteur étant du type à came, comportant une surface de came solidaire du manchon extérieur et un élément apte à se déplacer le long de la surface de came.

14. Dispositif selon la revendication 12 ou 13, dans lequel les moyens de suspension comportent une équerre (250) mobile en rotation autour d'un axe (252) solidaire d'un châssis (240) du dispositif de séparation, ladite équerre (250) comportant une branche d'appui (258) sur laquelle la masse (204) vient en appui et une branche d'actionnement (256) pour provoquer l'escamotage de la branche d'appui (258).

15. Dispositif selon la revendication 13, dans lequel le premier capteur (267) comporte un brin (264) apte à venir coopérer avec la branche d'actionnement (256) pour provoquer le basculement de l'équerre (250) et l'escamotage de la branche d'appui (258).

16. Dispositif selon l'une quelconque des revendications 10 à 15, dans lequel les bras (202) sont solidaires par une extrémité (242) opposée à celle destinée à venir en contact avec le premier sabot, à un palonnier (222) raccordé au vérin (221) par un bras de transmission (280) et un axe (224) le long duquel la masse (204) est apte à coulisser.

17. Dispositif selon l'une quelconque des revendications 10 à 16, comportant également un premier capteur (266) de position repos du vérin (221), ledit capteur de position repos étant du type à came, comportant une surface de came solidaire du manchon extérieur et un élément apte à se déplacer le long de la surface de came.

18. Installation pour le frittage de pastilles de combustible nucléaire comportant un four de frittage, dans lequel sont destinés à se déplacer en colonne des sabots portant des nacelles et un dispositif de séparation selon l'une quelconque des revendications précédentes, ledit dispositif de séparation étant disposé en aval du four dans le sens de déplacement des sabots.

19. Procédé de fabrication de pastilles de combustible nucléaire lors duquel des sabots de transport de pastilles de combustible nucléaire se déplacent sur un plan sensiblement horizontal et dont deux faces d'extrémité des sabots sont en contact l'une contre l'autre, lesdits sabots étant solidarisés par collage, ledit procédé comportant les étapes suivantes
a) détermination de la présence d'au moins un sabot,
b) application d'une contrainte mécanique à au moins un sabot dans une direction sensiblement verticale, ladite contrainte mécanique étant appliquée de préférence aux deux sabots simultanément, de sorte à rompre une liaison par collage entre les sabots.

20. Procédé selon la revendication 19, dans lequel lors l'étape a), la détermination de la présence d'un sabot s'effectue par l'intermédiaire de la détection d'un sabot aval prêt à être évacué, et 21 comportant suite à l'étape a), l'arrêt du déplacement des sabots.

## Patentansprüche

1. Vorrichtung, umfassend Mittel zur Separation von wenigstens zwei Transportschiffchen (10.2, 10.3, 110.1, 110.2, 210.1, 210.2) für Kernbrennstoffpastillen, die dazu ausgelegt sind, sich entlang einer ersten Achse (X) zu verlagern, und von denen zwei Endseiten in Kontakt miteinander sind, wobei die Schiffchen durch Verkleben miteinander verbunden sind, wobei die Separationsmittel dazu ausgelegt sind, wenigstens eines der zwei Schiffchen in der Nähe der in Kontakt befindlichen Endseiten entlang einer zweiten vertikalen Achse (Y) zu verlagern, die im Wesentlichen orthogonal zur ersten Achse (X) ist, derart, dass die Klebeverbindung zwischen den Schiffchen unterbrochen wird.

2. Vorrichtung nach Anspruch 1, umfassend Sensormittel (266,267) zur Erfassung des Vorhandenseins von Schiffchen, wobei die Mittel dazu ausgelegt sind, das Vorhandensein eines stromabwärtigen Schiffchens zu erfassen, das bereit ist, entfernt zu werden.

3. Vorrichtung nach Anspruch 1 oder 2, bei der die Separationsmittel wenigstens einen Exzenter (18,118) umfassen, der dazu ausgelegt ist, in Kontakt mit einer unteren Oberfläche wenigstens eines Schiffchens zu gelangen, um es entlang der zweiten Achse (Y) anzuheben, und bei der der Kontakt zwischen dem wenigstens einen Exzenter (18) und dem wenigstens einen Schiffchen (10.2, 10.3) im Bereich der Anlage zwischen den in Kontakt befindlichen Endflächen (12. 2,14.3) der zwei Schiffchen (10.2, 10.3) erfolgt, oder der Kontakt zwischen dem wenigstens einen Exzenter (118) und dem wenigstens einen Schiffchen (110.1, 110.2) an einem ersten (110.2) der Schiffchen in der Nähe der in Kontakt befindlichen Endflächen der zwei Schiffchen (110. 1,110.2) erfolgt.

4. Vorrichtung nach einem der Ansprüche 1-3, umfassend Mittel (32,124) zur Begrenzung der Verlagerung wenigstens eines Endes eines Schiffchens entlang der zweiten Achse (Y).

5. Vorrichtung nach Anspruch 4, bei der das Ende, dessen Verlagerung begrenzt ist, auf der Seite gegenüber dem angehobenen Ende liegt.

6. Vorrichtung nach Anspruch 4, bei der die Mittel (124) zur Begrenzung der Verlagerung entlang der zweiten Achse (Y) gleichzeitig die Verlagerung eines Endes (122.2) des ersten Schiffchens begrenzen, das von dem angehobenen Teil (120.2) entfernt ist, und die Verlagerung eines Endes (122.1) des anderen Schiffchens auf der Seite der in Kontakt befindlichen Endflächen der zwei Schiffchen.

7. Vorrichtung nach Anspruch 6, bei der die Mittel (126) zur Begrenzung der Verlagerung entlang der zweiten Achse (Y) Verlagerungsbegrenzungsexzenter (128,128', 129,129') umfassen, die dazu ausgelegt sind, sich einer oberen Oberfläche der Schiffchen zu nähern, um ihr Anheben bezüglich des Teils (120.2) zu begrenzen, der angehoben werden soll.

8. Vorrichtung nach Anspruch 7, bei der die Drehverlagerungen der Verlagerungsbegrenzungsexzenter (128,128', 129,129') und der Anhebeexzenter (118) derart synchronisiert sind, dass sich die Verlagerungsbegrenzungsexzenter (128,128', 129,199') und die Anhebeexzenter (118) gleichzeitig den oberen bzw. unteren Oberflächen der Schiffchen nähern.

9. Separationsvorrichtung nach Anspruch 1 oder 2, bei der die Separationsmittel dazu ausgelegt sind, einen Stoß gegen wenigstens ein erstes Schiffchen (210.2) in der Nähe der in Kontakt befindlichen Endflächen der zwei Schiffchen auszuführen.

10. Vorrichtung nach Anspruch 9, bei der die Separationsmittel Arme (202) umfassen, um das erste Schiffchen (210.2) lateral zu halten und den Stoß auf das erste Schiffchen (210.2) zu übertragen, wobei die Arme (202) mittels eines Zylinders (221) gegen das erste Schiffchen gedrückt werden.

11. Vorrichtung nach Anspruch 10, bei der der Stoß durch eine Masse (204) ausgeführt wird, die durch die Schwerkraft fällt, wobei die Masse (204) freigelassen wird, wenn eine vorbestimmte Spannung auf das erste Schiffchen (210.2) durch die Arme (202) ausgeübt wird, die dazu ausgelegt sind, gegen das Schiffchen zu drücken.

12. Vorrichtung nach dem vorhergehenden Anspruch, umfassend Mittel (250) zum Aufhängen der Masse (204) sowie Mittel zum Einziehen der Aufhängungsmittel (250).

13. Vorrichtung nach dem vorhergehenden Anspruch, bei der die Einziehmittel durch einen zweiten Sensor (267) gesteuert werden, der erfasst, dass die vorbestimmte Spannung erreicht ist, wobei der zweite Sensor vom Nockentyp ist, umfassend eine mit der Außenhülse verbundene Nockenoberfläche und ein Element, das dazu ausgelegt ist, sich entlang der Nockenoberfläche zu verlagern.

14. Vorrichtung nach Anspruch 12 oder 13, bei der die Aufhängungsmittel einen Bügel (250) umfassen, der drehbeweglich um eine Achse (252) ist, die mit einem Gehäuses (240) der Separationsvorrichtung verbunden ist, wobei der Bügel (250) einen Auflagerschenkel (258) umfasst, an den die Masse (204) in Anlage gerät, sowie einen Betätigungsschenkel (256) zum Bewirken des Einziehens des Auflagerschenkels (258).

15. Vorrichtung nach Anspruch 13, bei der der erste Sensor (267) ein Trum (264) umfasst, das dazu ausgelegt ist, mit dem Betätigungsschenkel (256) zusammen zu wirken, um das Kippen des Bügels (250) und das Einziehen des Auflagerschenkels (258) zu bewirken.

16. Vorrichtung nach einem der Ansprüche 10-15, bei der die Arme (202) an einem Ende (242), das jenem gegenüberliegt, das in Kontakt mit dem ersten Schiffchen gelangen soll, verbunden sind mit einem Hebel (222), der mit dem Zylinder (221) durch einen Übertragungsarm (280) verbunden ist, und eine Achse (224) entlang der die Masse (204) gleiten kann.

17. Vorrichtung nach einem der Ansprüche 10-16, ferner umfassend einen ersten Sensor (266) für die Ruheposition des Zylinders (221), welcher Ruhepositionssensor vom Nockentyp ist, umfassend eine Nockenoberfläche, die mit der äußeren Hülse verbunden ist, sowie ein Element, das sich entlang der Nockenoberfläche verlagern kann.

18. Anlage zum Sintern von Kernbrennstoffpastillen, umfassend einen Sinterofen, in dem sich Schiffchen in Kolonne verlagern sollen, die Schälchen tragen, und eine Separationsvorrichtung nach einem der vorhergehenden Ansprüche, welche Separationsvorrichtung in der Verlagerungsrichtung der Schiffchen stromabwärts des Ofens angeordnet ist.

19. Verfahren zur Herstellung von Kernbrennstoffpastillen, bei dem Schiffchen zum Transport von Kernbrennstoffpastillen sich in einer im wesentlichen horizontalen Ebene verlagern, und wobei zwei Endflächen der Schiffchen miteinander in Kontakt sind, wobei die Schiffchen durch Kleben miteinander verbunden sind, wobei das Verfahren die folgenden Schritte umfasst:
a) Bestimmen des Vorhandenseins wenigstens eines Schiffchens,
b) Ausüben einer mechanischen Spannung auf wenigstens ein Schiffchen in einer im wesentlichen vertikalen Richtung, wobei die mechanische Spannung vorzugsweise auf zwei Schiffchen gleichzeitig ausgeübt wird, derart, dass eine Klebeverbindung zwischen den Schiffchen gebrochen wird.

20. Verfahren nach Anspruch 19, bei dem während des Schritts a) die Bestimmung des Vorhandenseins eines Schiffchens mittels der Erfassung eines stromabwärtigen Schiffchens erfolgt, das bereit ist, entfernt zu werden, und umfassend im Anschluss an den Schritt a) das Stoppen der Verlagerung der Schiffchen.

## Claims

1. Device comprising means of separating at least two sintering shoes (10.2, 10.3, 110.1, 110.2, 210.1, 210.2) for transporting nuclear fuel pellets capable of moving according to a first axis (X) and of which two end faces are in contact with one another, said shoes being secured by bonding, wherein said separating means are capable of moving at least one of the two sintering shoes, close to said end faces in contact, according to a second vertical axis (Y) substantially orthogonal to the first axis (X), in order to break the bonding between shoes.

2. Device according to claim 1, comprising sensor means (266, 267) to detect the presence of sintering shoes, wherein said means are capable of detecting the presence of a sintering shoe downstream ready to be evacuated.

3. Device according to claim 1 or 2, wherein the separating means comprise at least one eccentric (18, 118) that can come into contact with a lower surface of at least one sintering shoe to raise it along the second axis (Y) and wherein the contact between the at least one eccentric (18) and the at least one sintering shoe (10.2, 10.3) is made at the contact point between the end faces in contact (12.2, 14.3) of the two sintering shoes (10.2, 10.3) or the contact between the at least one eccentric (118) and the at least one sintering shoe (110.1, 110.2) is made on a first sintering shoe (110.2) of the sintering shoes close to the end faces in contact of the two sintering shoes (110.1, 110.2).

4. Device according to any of claims 1 to 3, comprising means (32, 124) of limiting the movement of at least one end of a sintering shoe according to the second axis (Y).

5. Device according to claim 4, wherein said end of which the movement is limited is limited on the side opposite the end raised.

6. Device according to claim 4, wherein the means (124) of limiting the movement according to the second axis (Y), simultaneously limit the movement of one end (122.2) of the first sintering shoe remote from the part raised (120.2), and the movement of one end (122.1) of the other sintering shoe on the side of the end faces in contact with the two sintering shoes.

7. Device according to claim 6, wherein the means (126) of limiting the movement according to the second axis (Y) comprise eccentrics for limiting the movement (128, 128', 129, 129') capable of moving close to an upper surface of the sintering shoes to limit how far they are raised with respect to the part (120.2) that is to be raised.

8. Device according to claim 7, wherein the rotational movements of the eccentrics (128, 128', 129, 129') for limiting the movement and the eccentrics (118) for raising are synchronised so that the eccentrics for limiting the movement (128, 128', 129, 129') and the eccentrics for raising (118) simultaneously move closer to the upper and lower surfaces of the sintering shoes respectively.

9. Separating device according to claim 1 or 2, wherein the separating means are capable of exerting an impact on at least one first sintering shoe (210.2) close to the end faces in contact with the two sintering shoes.

10. Device according to claim 9, wherein the separating means comprise arms (202) to hold the first sintering shoe (210.2) laterally and to transmit the impact to the first sintering shoe (210.2), wherein said arms (202) are applied onto the first sintering shoe by an actuator (221).

11. Device according to claim 10, wherein the impact is applied by a mass (204) which drops due to gravity, the mass (204) being released when a predetermined stress is applied to the first sintering shoe (210.2) by the arms (202) designed to be in contact with the sintering shoe.

12. Device according to the previous claim, comprising means (250) of suspending the mass (204) and means of removing said suspension means (250).

13. Device according to the previous claim, wherein the removal means are controlled by a second sensor (267) which detects that the predetermined stress has been reached.

14. Device according to claim 12 or 13, wherein the suspension means comprise a square (250) that is mobile in rotation around a pin (252) that is fixed to a chassis (240) of the separating device, wherein said square (250) comprises a support leg (258) with which the mass (204) comes into contact and an actuation leg (256) to cause the removal of the support leg (258).

15. Device according to claim 13, wherein the first sensor (267) comprises a wire (264) that may engage with the actuation leg (256) to cause the square (250) to tilt and the support leg (258) to be removed.

16. Device according to any of claims 10 to 15, wherein the arms (202) are fixed by an end (242) opposite to that designed to come into contact with the first sintering shoe, to a cross-bar (222) connected to the actuator (221) by a transmission arm (280) and a pin (224) along which the mass (204) is capable of sliding.

17. Device according to any of claims 10 to 16, also comprising a first rest position sensor (266) of the actuator (221), said rest position sensor being of the cam type, comprising a cam surface fixed to the outer sleeve and an element that can move along the cam surface.

18. Installation for sintering nuclear fuel pellets comprising a sintering furnace, wherein sintering shoes carrying sintering boats and a separating device according to any of the previous claims are designed to be moved in a column, wherein said separating device is positioned downstream of the furnace in the direction of movement of the sintering shoes.

19. Manufacturing process for nuclear fuel pellets during which the shoes moves along a substantially horizontal plane, of which two end faces are in contact with one another, said shoes being secured by bonding, said process comprising the following steps:
a) the determination of the presence of at least one sintering shoe,
b) the application of a mechanical stress to at least one sintering shoe in a substantially vertical direction, said mechanical stress being preferably applied to the two sintering shoes simultaneously, in order to break the bonding between the shoes.

20. Process according to claim 29, wherein in step a), the presence of a sintering shoe is determined by the detection of a sintering shoe downstream that is ready to be evacuated and comprising, following on from step a), the movement of the sintering shoes is stopped.
